# EUROPEAN PATENT APPLICATION

(11) **EP 4 394 410 A1**
(43) Date of publication of application: **03.07.2024**
(21) Application number: 22861162.0
(22) Date of filing: 12.08.2022
(51) Int. Cl.: G01R 31/387, G01M 17/007, G01R 31/382

(54) **SPECIMEN TESTING SYSTEM, SPECIMEN TESTING PROGRAM, AND SPECIMEN TESTING METHOD**

(30) Priority: 26.08.2021 JP 2021137921
(71) Applicant: HORIBA, Ltd., Kyoto-shi, Kyoto 601-8510 (JP)
(72) Inventor: FURUKAWA, Kazuki, Kyoto-shi, Kyoto 601-8510 (JP); SHIOMI, Kenji, Kyoto-shi, Kyoto 601-8510 (JP); KIKUTA, Takayuki, Kyoto-shi, Kyoto 601-8510 (JP)
(74) Representative: Müller Hoffmann & Partner
(86) International application number: PCT/JP2022/030777
(87) International publication number: WO 2023/026873

(57) **Abstract**

The present invention not only performs a test over a long time by automatically performing a charging process of a motorized vehicle or a part thereof, but also tests a specimen under a condition that reproduces actual on-road traveling. A specimen testing system 100 that charges a specimen W that is a motorized vehicle or a part thereof by a power supply device 3 to test the specimen W includes a dynamometer 2 that applies a load to the specimen W, an information acquisition unit 6 that acquires information of the specimen W, and a test control unit 7 that controls a test of the specimen W based on the information of the specimen W. The test control unit 7, when the information of the specimen W satisfies a first condition, stops the operation of the specimen W and charges the specimen W by the power supply device 3, and when the information of the specimen W satisfies a second condition, stops the charging of the specimen W by the power supply device 3, and restarts the operation of the specimen W.

## Description

### Technical Field

The present invention relates to a specimen testing system, a specimen testing program, and a specimen testing method.

### Background Art

In recent years, development of a motorized vehicle has been promoted, and for example, as shown in Patent Literature 1, a cycle test system for testing a battery for an electric vehicle is considered.

This cycle test system performs a charge-discharge continuous test of a battery alone for an electric vehicle. Specifically, this cycle test system performs, for example, a charge-discharge continuous test for an automobile battery in an unmanned manner over several months, and includes a BCU that calculates a battery capacity on the basis of battery information of the automobile battery, and a charge-discharge device controlled on the basis of data of the battery capacity, and is configured to keep the battery capacity of the battery constant by the charge-discharge device.

### Citation List

### Patent Literature

Patent Literature 1: JP 2002-90431 A

### Summary of Invention

### Technical Problem

However, the above cycle test system performs a test of an automobile battery alone, and cannot test the behavior of an automobile battery in a state of being mounted on a vehicle.

Therefore, the present invention has been made to solve the above problems, and a main object of the present invention is not only to perform a test over a long time by automatically performing a charging process of a motorized vehicle or a part thereof, but also to test a specimen under conditions that reproduce actual on-road traveling.

### Solution to Problem

That is, a specimen testing system according to the present invention is a specimen testing system for testing a specimen by charging the specimen that is a motorized vehicle or a part thereof with a power supply device, the system including: a dynamometer that applies a load to the specimen; an information acquisition unit that acquires information of the specimen; and a test control unit that controls a test of the specimen on a basis of the information of the specimen, in which the test control unit stops an operation of the specimen and charges the specimen with the power supply device when the information of the specimen satisfies a first condition, and stops the charging of the specimen with the power supply device and restarts the operation of the specimen when the information of the specimen satisfies a second condition.

With such a configuration, when the information of the specimen satisfies the first condition, the operation of the specimen is stopped, and the specimen is charged by the power supply device, and when the information of the specimen satisfies the second condition, the charging of the specimen by the power supply device is stopped, and the operation of the specimen is restarted, so that the test can be performed over a long time by automatically performing the charging process of the motorized vehicle or a part thereof. In addition, since the test of the specimen can be performed by applying a load to the specimen by the dynamometer, the test of the specimen can be performed under conditions that reproduce actual on-road traveling and operating conditions appropriately set by the user.

It is preferable that the first condition includes: a state of charge (SOC) of the specimen is equal to or less than a first threshold; an operating time is equal to or more than a predetermined threshold; a travel distance is equal to or more than a predetermined threshold; the number of predetermined operation cycles is equal to or more than a predetermined threshold; a difference between a reference vehicle speed and an actual vehicle speed is equal to or more than a predetermined threshold; or a deviation in a relationship between an accelerator amount and a vehicle speed or acceleration is equal to or more than a predetermined threshold. Note that SOC is an abbreviation of State Of Charge, and is an index indicating a charging rate or a state of charge. The SOC is defined as 100% in a fully charged state and 0% in a fully discharged state. The electric energy may be indicated as the state of charge.

It is preferable that the second condition includes: a state of charge (SOC) of the specimen is equal to or more than a second threshold; a predetermined time has elapsed; or a power supply amount by the power supply device is equal to or more than a predetermined threshold.

It is preferable that the specimen testing system of the present invention further includes: a connector that detachably connects a power cable from the power supply device to the specimen; and a detachable mechanism that attaches and detaches the connector to and from the specimen, and the test control unit controls the detachable mechanism to connect the connector to the specimen when charging the specimen, and controls the detachable mechanism to remove the connector from the specimen when stopping charging the specimen.

It is preferable that the specimen testing system of the present invention further includes a connector that connects a power cable from the power supply device to the specimen, and the test control unit transmits a simulation signal indicating that the connector is attached to or detached from the specimen to the specimen, and switches charging and stopping of charging of the specimen in a state where the connector is connected to the specimen.

In order to perform a traveling test of the motorized vehicle or a part thereof over a long time, it is preferable that the specimen testing system of the present invention further includes an automatic driving robot that automatically drives the specimen, and the test control unit controls the automatic driving robot to stop or restart the operation of the specimen.

In order to perform a traveling test simulating traveling on an actual road, it is desirable to further include a blower fan that blows air in conjunction with an operation of the specimen.

The specimen testing program according to the present invention is a specimen testing program used in a specimen testing system that charges a specimen that is a motorized vehicle or a part thereof by a power supply device and applies a load to the specimen by a dynamometer to perform a test, the specimen testing program causing a computer to exhibit functions as: an information acquisition unit that acquires information of the specimen; and a test control unit that controls a test of the specimen on a basis of the information of the specimen, in which the test control unit stops an operation of the specimen and charges the specimen with the power supply device when the information of the specimen satisfies a first condition, and stops the charging of the specimen with the power supply device and restarts the operation of the specimen when the information of the specimen satisfies a second condition.

The specimen testing method according to the present invention is a specimen testing method for charging a specimen that is a motorized vehicle or a part thereof by a power supply device and performing a test by applying a load to the specimen by a dynamometer, the specimen testing method including: acquiring information of the specimen, stopping an operation of the specimen and charging the specimen with the power supply device when the information of the specimen satisfies a first condition, and stopping the charging of the specimen with the power supply device and restarting the operation of the specimen when the information of the specimen satisfies a second condition.

### Advantageous Effects of Invention

According to the present invention described above, the charging process in the traveling test of the motorized vehicle or a part thereof can be automatically performed.

### Brief Description of Drawings

FIG. 1 is a diagram schematically illustrating a configuration of a specimen testing system according to an embodiment of the present invention.
FIG. 2 is a flowchart of a specimen testing method according to the embodiment.
FIG. 3 is a diagram illustrating a relationship between a charge amount (or a state of charge) and a travel distance (or travel time) according to a modified embodiment.

### Description of Embodiments

Hereinafter, a specimen testing system according to an embodiment of the present invention will be described with reference to the drawings.

### <Device configuration of specimen testing system 100>

The specimen testing system 100 of the present embodiment tests a specimen W that is a motorized vehicle or a part thereof. The specimen W of the present embodiment is a completed vehicle of a motorized vehicle such as an electric vehicle (EV), but the specimen W may include a battery and a motor which are a part of the motorized vehicle.

Examples of the test item include charging and discharging performance of the battery of the specimen W, a temporal change such as deterioration of the battery, the inverter, or the motor, electric cost of the specimen W and a temporal change thereof, a change in charging power with respect to a travel distance of the specimen W, and a thermal change of the battery, the inverter, the motor, or the like of the specimen W.

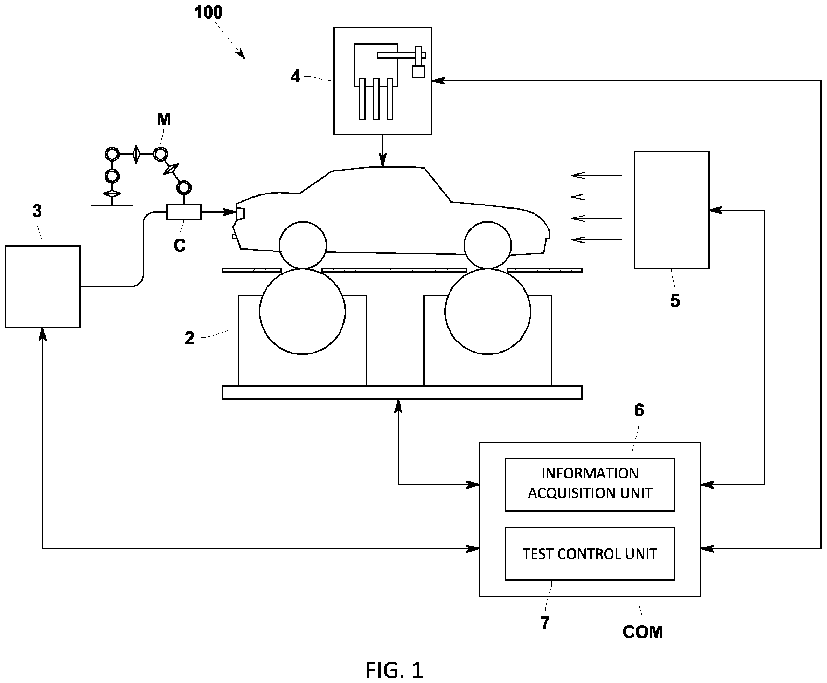

Specifically, as illustrated in FIG. 1, the specimen testing system 100 includes a chassis dynamometer 2 on which a specimen W is placed and which applies a load to the specimen W, a power supply device 3 which supplies power to a battery of the specimen W, an automatic driving robot 4 which is an automatic driving device that automatically drives the specimen W, a blower fan 5 which blows air in conjunction with the operation of the specimen W, an information acquisition unit 6 which acquires information of the specimen W, and a test control unit 7 which controls a test of the specimen W on the basis of the information of the specimen W.

The information acquisition unit 6 and the test control unit 7 are constituted by a computer COM having an input means such as a CPU, a memory, an input/output interface, an AD converter, and a keyboard, a communication means, and an output means such as a display. The CPU and the peripheral device cooperate with each other based on the specimen testing program stored in the memory, whereby the functions of the information acquisition unit 6 and the test control unit 7 are exerted.

The information acquisition unit 6 acquires information of various specimens W from the specimen W, the chassis dynamometer 2, the power supply device 3, and the like.

Specifically, the information acquisition unit 6 acquires, for example, vehicle information, a travel distance such as a cruising distance, a vehicle speed, a vehicle temperature, a rotation speed of a motor, a state of charge (SOC) of a battery, power supply information, or the like as the information of the specimen W. Then, the information acquisition unit 6 transmits the acquired information of the specimen W to the test control unit 7. The information acquisition unit 6 may capture an image of the instrument panel of the specimen W with a camera and calculate each piece of the above information (for example, SOC) from the captured image.

In addition, the information acquisition unit 6 can acquire the power supply information from a power meter, an ammeter, or a voltmeter provided in a power cable connecting the specimen W and the power supply device 3. In addition, various types of information (for example, environmental data such as ambient temperature (test chamber temperature)) can be acquired from various sensors installed on the specimen or around the specimen.

The test control unit 7 controls the traveling test of the specimen W based on the information of the specimen W acquired from the information acquisition unit 6. The specimen W is driven by controlling the automatic driving robot 4 by the test control unit 7. The automatic driving robot 4 includes at least one of an accelerator pedal actuator for operating an accelerator pedal, a brake pedal actuator for operating a brake pedal, and a switch actuator for operating a vehicle activation switch. The test control unit 7 controls the chassis dynamometer 2 to apply a load to the specimen W. Further, when the blower fan 5 is controlled by the test control unit 7, air in conjunction with (synchronized with) a traveling state or the vehicle speed of the specimen W is applied to the specimen W. When the air is applied in conjunction with the traveling state of the specimen W, the blower fan 5 is turned on when the specimen W travels, and the blower fan 5 is turned off when the specimen W stops traveling. The specimen W may be cooled by the blower fan 5 while the specimen W is stopped traveling or charged.

Specifically, during the test of the specimen, when the information of the specimen W satisfies the first condition, the test control unit 7 controls the automatic driving robot to stop the operation of the specimen W, charges the battery of the specimen W with the power supply device 3, and when the information of the specimen W satisfies the second condition, the test control unit 7 stops the charging of the battery of the specimen W with the power supply device 3 and restarts the operation of the specimen W.

Here, the first condition includes that the state of charge (SOC) of the specimen W is equal to or less than a first threshold, the operating time is equal to or more than a predetermined threshold, the travel distance is equal to or more than a predetermined threshold, the number of predetermined operation cycles is equal to or more than a predetermined threshold, the difference between the reference vehicle speed and the actual vehicle speed is equal to or more than a predetermined threshold, or the deviation of the relationship between the accelerator amount and the vehicle speed or the acceleration is equal to or more than a predetermined threshold. Each threshold is individually set according to each parameter. The predetermined operation cycle is a travel mode in which a vehicle speed, a load, and the like set by the user are used as parameters. Furthermore, since the difference between the reference vehicle speed and the actual vehicle speed increases when the state of charge of the specimen W decreases or is cut off, the first condition can be set by providing a threshold to the difference between the reference vehicle speed and the actual vehicle speed. Furthermore, since the deviation of the relationship between the accelerator amount and the vehicle speed or the acceleration also increases when the state of charge of the specimen W decreases or is cut off, the deviation of the relationship between the accelerator amount and the vehicle speed or the acceleration can be set to the first condition by providing a threshold. Specific examples of the threshold include a first threshold that is a threshold of a state of charge (SOC) of the specimen W, a time threshold that is a threshold of an operating time, a distance threshold that is a threshold of a travel distance, a cycle threshold that is a threshold of the number of operation cycles, a vehicle speed difference threshold that is a threshold of a difference between a reference vehicle speed and an actual vehicle speed, a vehicle speed deviation threshold that is a threshold of a deviation in a relationship between an accelerator amount and a vehicle speed, and an acceleration deviation threshold that is a threshold of a deviation in a relationship between an accelerator amount and an acceleration. The first condition of the present embodiment is, for example, that the state of charge (SOC) of the specimen W becomes 0%. The first condition can be appropriately set by the user in the test.

The second condition includes that the state of charge (SOC) of the specimen W is equal to or more than the second threshold or that a predetermined time has elapsed. Here, the SOC can be acquired by a signal from OBD or ECU of the specimen W, a signal from a battery meter of the specimen W, a signal from the power supply device 3, or the like. The second condition may be that a power supply amount from the power supply device 3 is measured and the power supply amount is equal to or more than a predetermined power supply threshold. The second condition of the present embodiment is, for example, that the state of charge (SOC) of the specimen W becomes 80%. The second condition can be appropriately set by the user in the test.

The start and stop of charging by the power supply device 3 can be performed by, for example, the following (1) or (2).

(1) The specimen testing system 100 further includes a connector C that detachably connects a power cable from the power supply device 3 to a charging port (not illustrated) of the specimen W, and a detachable mechanism M that attaches and detaches the connector C to and from the charging port of the specimen W. The test control unit 7 controls the detachable mechanism M and the power supply device 3 to start and stop charging. As the detachable mechanism M, it is conceivable to have a configuration including a gripping portion that grips the connector C and a driving portion that moves the gripping portion to insert and remove the connector C into and from the charging port. In addition, the detachable mechanism M may be a portable mechanism or a stationary mechanism.
   In this configuration, the charging port of the specimen W may be imaged by a camera, a position specifying unit that specifies the position of the charging port by image processing may be provided, and the gripping portion may be moved by the driving portion with respect to the position of the charging port specified by the position specifying unit. In addition, in a case where the connector C includes a button, a trigger, or the like, the gripping portion may have an operation function of operating the button, the trigger, or the like.
(2) The specimen testing system 100 further includes a connector that connects the power cable from the power supply device 3 to the charging port of the specimen W. The test control unit 7 transmits, to the specimen W, a simulation signal indicating that the connector is attached to or detached from the charging port of the specimen W. In a state where the connector is connected to the charging port of the specimen W, the test control unit 7 switches charging and stopping of charging of the specimen W. When starting charging the battery of the specimen W, the test control unit 7 transmits a simulation signal indicating that the connector is connected to the charging port of the specimen W to the specimen W via, for example, the power supply device 3, and controls the power supply device 3 to start charging the battery of the specimen W. On the other hand, when stopping the charging of the battery of the specimen W, the test control unit 7 transmits a simulation signal indicating that the connector is removed from the charging port of the specimen W to the specimen W via, for example, the power supply device 3, and controls the power supply device 3 to stop the charging of the battery of the specimen W.

In this configuration, the connector is connected to the charging port during the test (travelling) of the specimen W. Therefore, when detecting that the connector is detached during the test of the specimen W, the test control unit 7 may perform control to stop the test by stopping the automatic driving robot 4, the chassis dynamometer 2, or the like.

### <Specimen testing method>

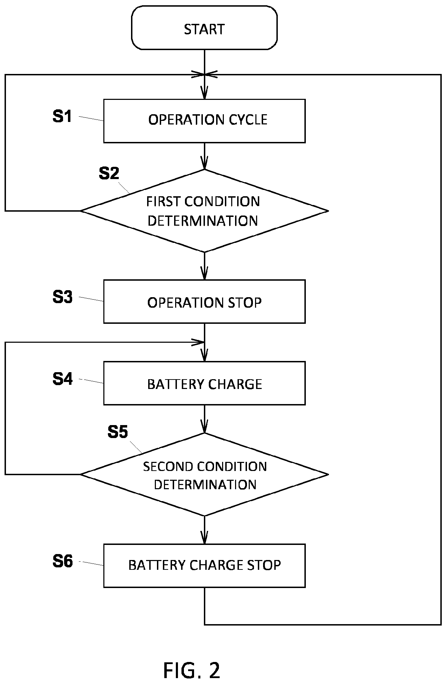

Next, a specimen testing method using the specimen testing system 100 will be described with reference to FIG. 2.

### (1) S1: operation cycle

The test control unit 7 controls the automatic driving robot 4, the chassis dynamometer 2, and the blower fan 5 based on the operation cycle set by the user. At the start of this operation cycle, the battery of the specimen W is in a fully charged state (SOC = 100%), for example. The operation cycle is set using, for example, a vehicle speed (motor rotational speed), a load (traveling resistance) applied to the specimen W, a test time, and the like as parameters.

### (2) S2: first condition determination

In the above operation cycle, the information acquisition unit 6 constantly acquires information of the specimen W from the specimen W or the like, and the test control unit 7 determines whether or not the acquired information of the specimen W satisfies the first condition (for example, SOC = 0%).

### (3) S3: operation stop

The test control unit 7, when determining that the acquired information of the specimen W satisfies the first condition (for example, SOC = 0%), stops the operation of the specimen W. Specifically, the test control unit 7 transmits a stop signal to the automatic driving robot 4 to stop the operation of the specimen W. The test control unit 7 also stops the operation of the chassis dynamometer 2 along with the stop of the operation of the specimen W. Further, the test control unit 7 also stops the operation of the blower fan 5 or other test equipment. The test control unit 7 can also output an output signal indicating that the specimen W is in operation or the specimen W is being charged. Specifically, the test control unit 7 can also display that the specimen W is in operation or the specimen W is being charged using a display device such as a display or a lighting lamp.

### (4) S4: battery charge

After stopping the operation of the specimen W, the test control unit 7 transmits a power supply start signal to the power supply device 3 to start charging the battery of the specimen W. Here, in the case of a configuration having a detachable mechanism for attaching and detaching the connector, the test control unit 7 controls the detachable mechanism to connect the connector to the charging port. In the case of the configuration of transmitting the simulation signal simulating the attachment and detachment of the connector, the test control unit 7 transmits the simulation signal indicating that the connector is connected to the charging port to the specimen W.

### (5) S5: second condition determination

The test control unit 7, when determining that the acquired information of the specimen W satisfies the second condition (for example, SOC = 80%), stops charging the battery of the specimen W (S6). Specifically, the test control unit 7 transmits a power supply stop signal to the power supply device 3 to stop charging the battery of the specimen W. Here, in the case of a configuration having a detachable mechanism for attaching and detaching the connector, the test control unit 7 controls the detachable mechanism to remove the connector from the charging port. In the case of the configuration of transmitting the simulation signal simulating the attachment and detachment of the connector, the test control unit 7 transmits the simulation signal indicating that the connector is removed from the charging port to the specimen W.

The test control unit 7, when determining that the acquired information of the specimen W satisfies the second condition (for example, SOC = 80%), stops charging the battery of the specimen W (S6), and then automatically restarts the operation of the specimen W (S1). Specifically, the test control unit 7 transmits an operation signal to the automatic driving robot 4 to restart the operation of the specimen W. The test control unit 7 also restarts the operation of the chassis dynamometer 2 along with the restart of the operation of the specimen W. The test control unit 7 also restarts the operation of the blower fan 5.

### <Effects of present embodiment

According to the specimen testing system 100 of the present embodiment, when the information of the specimen W satisfies the first condition, the operation of the specimen W is stopped, the specimen W is charged by the power supply device 3, and when the information of the specimen W satisfies the second condition, the charging of the specimen by the power supply device 3 is stopped, and the operation of the specimen W is restarted. Therefore, it is possible to perform a test (for example, a durability test) over a long time (for example, several months) by automatically performing the charging process of the motorized vehicle or a part thereof. In addition, since the test of the specimen W can be performed by applying a load to the specimen W by the chassis dynamometer 2, the test of the specimen W can be performed under conditions that reproduce actual on-road traveling and operating conditions appropriately set by the user.

### <Other modified embodiments>

Note that the present invention is not limited to the above embodiments.

For example, in the above embodiments, the automatic driving device 4 is an automatic driving robot. However, instead of the automatic driving robot, the automatic driving device may be an automatic driving input device that inputs a signal when at least one of an accelerator pedal actuator that operates an accelerator pedal, a brake pedal actuator that operates a brake pedal, and a switch actuator that operates a vehicle activation switch is operated to the specimen W. It is also conceivable that the test control unit 7 transmits a control signal to a motor control device (MCU) that controls the motor of the specimen W to control the operation and stop of the specimen W. Alternatively, the blower fan may not be provided.

In the above embodiment, the battery of the specimen W may be charged by forcibly rotating the wheel by the chassis dynamometer 2 with the specimen W in the regeneration mode.

Further, a power meter may be provided in a power cable between the power supply device 3 and the specimen W, and measurement data of the power meter may be managed by an electronic terminal such as a tablet or a computer. With this electronic terminal, it is possible to determine the start and end of charging of the specimen W and monitor the charge amount. In addition, the electronic terminal can acquire the travel distance data from the test control unit 7 or the specimen W and record the relationship between the charge amount and the travel distance. As a result, the electric cost of the specimen W can be measured in the electronic terminal.

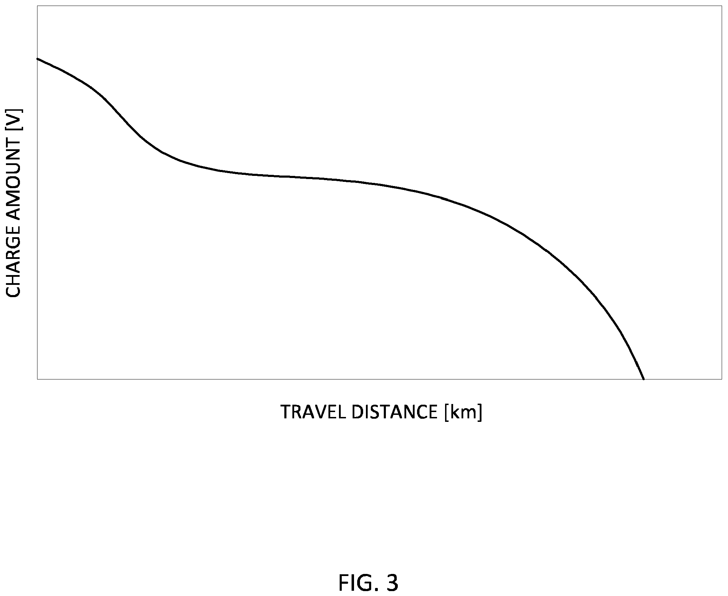

In addition, as illustrated in FIG. 3, the electronic terminal may display the relationship between the charge amount (or state of charge) and the travel distance (or travel time). Here, as the relationship between the charge amount (or state of charge) and the travel distance (or travel time), a change between the charge amount (or state of charge) and the travel distance (or travel time) during traveling may be plotted, or a total travel distance (or total travel time) with respect to the charge amount (or state of charge) before the start of traveling may be plotted. Further, the electronic terminal may store a relationship between the charge amount (or state of charge) and the travel distance (or travel time) in a plurality of tests, and statistically analyze the relationship so as to be able to reproduce the relationship between the charge amount (or state of charge) and the travel distance (or travel time) corresponding to the vehicle type.

Further, in addition to the configuration of the above embodiment, the test control unit 7 may monitor the temperature of the specimen W by a temperature sensor or the like, determine that the specimen W is abnormal when the temperature of the specimen W becomes equal to or higher than a predetermined temperature, and stop the test by stopping the automatic driving robot 4, the chassis dynamometer 2, or the like.

In the above embodiment, the chassis dynamometer for testing the completed vehicle is used, but a motor dynamometer for applying a load to the motor of the specimen may be used, or a powertrain dynamometer for applying a load to the powertrain of the specimen may be used.

In the above embodiment, the electric vehicle is taken as an example of the motorized vehicle, but a plug-in hybrid vehicle or a hybrid vehicle may be used. In this case, in addition to the above configuration, the specimen testing system may include an exhaust gas analyzer, or may include an exhaust device that exhausts exhaust gas from a test chamber in which the specimen testing system is installed.

In addition, various modifications and combinations of the embodiments may be made without departing from the gist of the present invention.

### Industrial Applicability

According to the present invention, not only the test over a long time can be performed by automatically performing the charging process of the motorized vehicle or a part thereof, but also the test of the specimen can be performed under the conditions that reproduce actual on-road traveling.

### Reference Signs List

- 100: specimen testing system
- W: specimen
- 2: chassis dynamometer (dynamometer)
- 3: charging device
- 4: automatic driving device (automatic driving robot)
- 5: blower fan
- 6: information acquisition unit
- 7: test control unit
- C: connector
- M: detachable mechanism

## Claims

1. A specimen testing system that tests a specimen by charging the specimen that is a motorized vehicle or a part thereof with a power supply device, the specimen testing system comprising:
a dynamometer that applies a load to the specimen;
an information acquisition unit that acquires information of the specimen; and
a test control unit that controls a test of the specimen on a basis of the information of the specimen, wherein
the test control unit stops an operation of the specimen and charges the specimen with the power supply device when the information of the specimen satisfies a first condition, and stops the charging of the specimen with the power supply device and restarts the operation of the specimen when the information of the specimen satisfies a second condition.

2. The specimen testing system according to claim 1, wherein
the first condition includes:
a state of charge (SOC) of the specimen being equal to or less than a first threshold;
an operating time being equal to or more than a predetermined threshold;
a travel distance being equal to or more than a predetermined threshold;
a number of predetermined operation cycles being equal to or more than a predetermined threshold;
a difference between a reference vehicle speed and an actual vehicle speed being equal to or more than a predetermined threshold; or
a deviation in a relationship between an accelerator amount and a vehicle speed or acceleration being equal to or more than a predetermined threshold.

3. The specimen testing system according to claim 1 or 2, wherein the second condition includes:
a state of charge (SOC) of the specimen being equal to or more than a second threshold;
a predetermined time having elapsed; or
a power supply amount by the power supply device being equal to or more than a predetermined threshold.

4. The specimen testing system according to any one of claims 1 to 3, further comprising:
a connector that detachably connects a power cable from the power supply device to the specimen; and
a detachable mechanism that attaches and detaches the connector to and from the specimen, wherein
the test control unit controls the detachable mechanism to connect the connector to the specimen when charging the specimen, and controls the detachable mechanism to remove the connector from the specimen when stopping charging the specimen.

5. The specimen testing system according to any one of claims 1 to 3, further comprising a connector that connects a power cable from the power supply device to the specimen, wherein the test control unit transmits a simulation signal indicating that the connector is attached to or detached from the specimen to the specimen, and switches charging and stopping of charging of the specimen in a state where the connector is connected to the specimen.

6. The specimen testing system according to any one of claims 1 to 5, further comprising an automatic driving device that automatically drives the specimen, wherein the test control unit stops or restarts the operation of the specimen by the automatic driving device.

7. The specimen testing system according to any one of claims 1 to 6, further comprising a blower fan that blows air in conjunction with the operation of the specimen.

8. A specimen testing program used in a specimen testing system that charges a specimen that is a motorized vehicle or a part thereof by a power supply device and applies a load to the specimen by a dynamometer to perform a test, the specimen testing program causing a computer to exhibit functions as:
an information acquisition unit that acquires information of the specimen; and
a test control unit that controls a test of the specimen on a basis of the information of the specimen, wherein
the test control unit stops an operation of the specimen and charges the specimen with the power supply device when the information of the specimen satisfies a first condition, and stops the charging of the specimen with the power supply device and restarts the operation of the specimen when the information of the specimen satisfies a second condition.

9. A specimen testing method for charging a specimen that is a motorized vehicle or a part thereof by a power supply device and performing a test by applying a load to the specimen by a dynamometer, the specimen testing method comprising acquiring information of the specimen, stopping an operation of the specimen and charging the specimen with the power supply device when the information of the specimen satisfies a first condition, and stopping the charging of the specimen with the power supply device and restarting the operation of the specimen when the information of the specimen satisfies a second condition.
